# EUROPÄISCHE PATENTANMELDUNG

(11) **EP 3 783 169 A1**
(43) Veröffentlichungstag der Anmeldung: **24.02.2021**
(21) Anmeldenummer: 20190347.3
(22) Anmeldetag: 10.08.2020
(51) Int. Cl.: E04H 4/10, B65D 90/42, E04H 7/22, B65D 90/06, G01K 11/00, E04H 4/08

(54) **ABDECKUNG**

(30) Priorität: 23.08.2019 DE 102019122680
(71) Anmelder: Kronfellner, Michael, 3163 Rohrbach (AT)
(72) Erfinder: Kronfellner, Michael, 3163 Rohrbach (AT)
(74) Vertreter: Müller, Jochen

(57) **Zusammenfassung**

Eine Abdeckung (10) für einen Behälter (11), insbesondere einen offenen Flüssigkeits- und/oder Feststoffspeicher, in dem eine Substanz (14) aufgenommen ist, weist wenigstens einen Abschnitt (12) auf, der thermochromatisch ist, so dass der Abschnitt (12) seine Farbe entsprechend der Temperatur der abgedeckten Substanz (14) einstellt.

## Beschreibung

Die Erfindung bezieht sich auf eine Abdeckung für einen Behälter, insbesondere einen offenen Flüssigkeits- und/oder Feststoffspeicher, nach dem Oberbegriff nach Anspruchs 1.

Es sind Planen für Freiluftschwimmbecken bekannt, die auf die Wasseroberfläche gelegt werden, so dass das im Schwimmbecken vorhandene Wasser vor Verschmutzungen, wie Blätter und Blütenstaub, geschützt ist. Bei Regen sammelt sich Wasser auf der Plane, das dann beim Abdecken mit dem Schmutz in das Schwimmbecken gelangt.

Um diesem Problem entgegen zu wirken, ist es bekannt wasserdurchlässige Öffnungen in die Plane einzubringen. Die DE 10 2010 033 651A1 offenbart eine Plane für ein Schwimmbecken, bei der ein Bereich erster Durchlässigkeit und ein Bereich zweiter Durchlässigkeit vorhanden ist, durch die gefiltertes Regenwasser in ein Freiluft-Schwimmbecken eingelassen wird. Allerdings wirkt sich solch eine Plane thermisch unvorteilhaft auf das Wasser im Schwimmbecken aus, da bei hoher Sonnenstrahlung das Wasser relativ stark aufgeheizt wird.

Der Erfindung liegt die Aufgabe zugrunde, eine Abdeckung zu schaffen, die die Temperatur einer Substanz in einem Behälter regulieren kann und gleichzeitig Schmutz und Regenwasser trennt, wobei das Regenwasser die Abdeckung nicht beschweren soll.

Erfindungsgemäß wird die Aufgabe durch die Merkmale des Anspruchs 1 gelöst.

Vorteilhafte Weiterbildungen und Alternativen sind in den abhängigen Ansprüchen aufgeführt.

Es wird vorgeschlagen, eine Abdeckung für einen Behälter, der insbesondere ein offener Flüssigkeits- und/oder Feststoffspeicher sein kann, vorzusehen, wobei die Abdeckung wenigstens einen Abschnitt aufweist, der thermochromatisch ist. Dieser Abschnitt verändert seine Farbe entsprechend der Temperatur einer abgedeckten Substanz. Die Substanz befindet sich in dem Behälter. Durch das Anpassen der Farbe wird die Absorption von beispielsweise Sonnenstrahlung durch die Abdeckung angepasst. Durch die Anpassung kann die Temperatur der Substanz reguliert werden. Der Behälter kann ein Schwimmbecken sein, während die Substanz in das Schwimmbecken gefülltes Wasser sein kann.

Vorteilhafterweise kann der thermochromatische Abschnitt eine thermochromatische Beschichtung aufweisen. Alternativ oder ergänzend umfasst der Abschnitt ein Material, das einen thermochromatischen Stoff aufweist. Weiter alternativ oder ergänzend kann der Abschnitt thermochromatische Fasern enthalten. Die thermochromatische Beschichtung und/oder der thermochromatische Stoff können organisch und/oder anorganisch sein. Beispielsweise kann die thermochromatische Beschichtung und/oder der thermochromatische Stoff als Polymer ausgebildet sein.

Zweckmäßigerweise kann durch Sonnenstrahlung die abgedeckte Substanz durch die Abdeckung erwärmt werden, wobei der thermochromatische Abschnitt bei steigender Temperatur eine Farbe annimmt, die zu einer geringeren Absorption der Sonnenstrahlung führt, wobei vorzugsweise die Farbe insbesondere bei etwa 30 °C transparent ist. Beispielsweise wird die Sonnenstrahlung umso stärker reflektiert, desto heller die Farbe ist. Wenn der thermochromatische Abschnitt transparent wird, dann erfolgt nahezu keine Absorption durch die Abdeckung. Tagsüber kann die Aufwärmung der Substanz erfolgen, während die Abdeckung die Substanz vor der Umgebung isoliert, sodass bei Nacht die Wärme in der Substanz gespeichert bleibt. Bei niedrigen Temperaturen kann sich der Abschnitt dunkelblau verfärben. Dadurch wird das Wasser auf eine angenehme Badetemperatur eingestellt, da die bei niedrigeren Temperaturen maximale Energie speichert und abgibt, während bei hohen Temperaturen die Sonnenenergie nicht aufgenommen, sondern zerstreut wird.

Bei einer besonderen Weiterbildung kann die Abdeckung einen Filter aufweisen, der beispielsweise für Regenwasser durchlässig ist, jedoch kleine Festkörper wie Schmutz herausfiltert, wobei der Filter insbesondere Fasern aufweist, die gefilzt, gewoben, gewirkt oder gestrickt sind. Der Filter kann ein feinmaschiges Netz sin. Das Regenwasser, welches auf die Abdeckung fällt, kann durch den durchlässigen Filter in den Behälter fließen, während der Schmutz auf der Außenseite der Abdeckung bleibt. Ergänzend kann der Filter mit Aktivkohle ausgestattet werden, um chemische und mikrobiologische Verschmutzungen des Regenwassers zu entfernen.

Damit eine gezielte Filterung erfolgen kann, ist der Filter insbesondere an einem Rand der Abdeckung und/oder in der Mitte der Abdeckung angeordnet. Der Filter kann dabei kreisförmig, ringförmig und/oder quadratisch sein. So kann beispielsweise das Regenwasser, welches sich aufgrund des Eigengewichtes am Rand und/oder der Mitte der Abdeckung sammelt, durch den Filter fließen.

Um einen effizienten Wärmeaustausch zwischen der Abdeckung und der Substanz zu gewährleisten, kann die Abdeckung auf einer der Substanz zugewandten Unterseite Noppen aufweisen, die vorzugsweise Schaumstoff oder Luft umfassen. Die Noppen können auf der gesamten Unterseite der Abdeckung ausgebildet sein. Ferner kann der Filter ohne Noppen ausgebildet sein, sodass die Noppen vorzugsweise nur mi Bereich des thermochromatischen Abschnitts angeordnet sind. Beispielsweise kann eine Flüssigkeit zwischen die Noppen strömen und die Wärme durch die vergrößerte Oberfläche aufnehmen. Beispielsweise kann Wasser eines Schwimmbeckens zwischen den Noppen zirkulieren und durch Sonnenstrahlung in die Abdeckung eingetragene Wärmeenergie absorbieren.

Weiterhin ist es von Vorteil die Abdeckung als Plane auszubilden, die über eine Öffnung des Behälters ziehbar ist, so dass die Öffnung abgedeckt ist. Die Plane ist flexibel und kann sich an die Öffnung des Behälters anpassen. Beispielsweise kann Regenwasser auf die Plane fallen und durch den Filter in den Behälter fließen.

Zweckmäßigerweise ist ein Befestigungsmittel an dem Rand, insbesondere im Bereich eines Schlitzes in der Abdeckung, vorhanden, so dass der Umfang des Randes verringerbar ist. Werden die Bereiche des Randes neben dem Schlitz aneinander angenähert und durch das Befestigungsmittel fixiert, kann die Abdeckung die Öffnung fest umschließen. Alternativ kann auf den Schlitz verzichtet und eine Falte erzeugt werden, die durch das Befestigungsmittel fixiert wird. Das Befestigungsmittel kann einen Klettverschluss umfassen. Es verschließt die Abdeckung wetterfest.

Durch ein Haltemittel auf einer Oberseite, insbesondere im Bereich des Rands der Abdeckung, an dem eine Haltevorrichtung angebracht werden kann, kann die Abdeckung vorteilhaft einfach auf dem Behälter angeordnet und von demselben entfernt werden. Das Haltemittel kann einen Klettverschluss oder Haken oder Ösen oder einen Reißverschluss umfassen.

Bevorzugt wird die Abdeckung mittels einer Haltevorrichtung auf den Behälter durch Aufrollen und Abrollen auf der Haltevorrichtung aufgebracht und/oder entfernt. Dadurch kann eine Rolle aus der Abdeckung erzeugt werden, die mittels der Haltevorrichtung transportiert und platzsparend verstaut werden kann. Die Haltevorrichtung wird durch komplementäre Elemente an dem Haltemittel an der Abdeckung befestigt.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand eines Ausführungsbeispiels unter Bezugnahme auf die zugehörigen Zeichnungen näher erläutert.

Es zeigt:
- Fig. 1: eine Darstellung eines Behälters mit einer teilweise auf einer Haltevorrichtung aufgerollten Abdeckung,
- Fig. 2: eine Schnittdarstellung durch den Behälter mit der Abdeckung,
- Fig. 3: eine Darstellung der Abdeckung mit thermochromatischem Abschnitt und wenigstens einem Filter sowie einer Haltevorrichtung und
- Fig. 4: eine Darstellung eines Befestigungsmittels am Rand der Abdeckung.

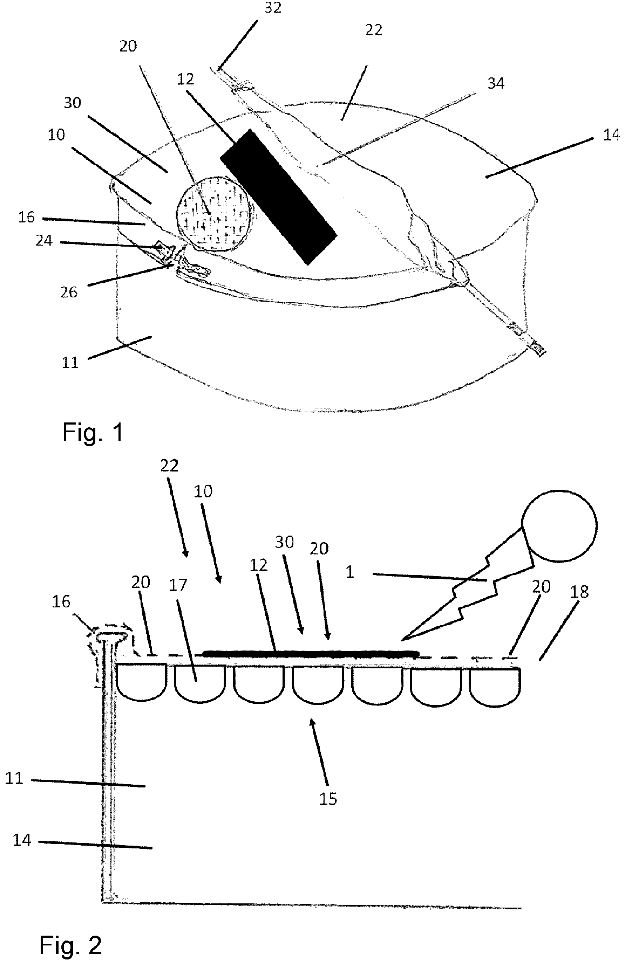

Figur 1 stellt eine Abdeckung 10 auf einem Behälter 11 dar, wobei die Abdeckung 10 auf einer Oberseite 30, einen thermochromatischen Abschnitt 12 aufweist. Der thermochromatische Abschnitt 12 ändert seine Farbe in Abhängigkeit der Temperatur einer in dem Behälter 11 befindlichen Substanz 14. Die Substanz 14 kann Wasser und der Behälter 11 ein Schwimmbecken sein, wobei die Abdeckung 10 eine Plane sein kann. Der thermochromatische Abschnitt 12 umfasst eine thermochromatische Beschichtung und/oder einen thermochromatischen Stoff und/oder eine thermochromatische Faser, wobei die thermochromatische Beschichtung und/oder der thermochromatische Stoff organisch und/oder anorganisch und vorzugsweise als Polymer ausgebildet sein können.

In die Abdeckung 10 ist ein Filter 20 eingebracht, der aus einem Fasergebilde bestehen kann. Der Filter 20, der beispielsweise für Regenwasser durchlässig ist, jedoch kleine Festkörper wie Schmutz herausfiltert, kann insbesondere Fasern aufweisen, die gefilzt, gewoben, gewirkt oder gestrickt sind. Der Filter 20 kann ein insbesondere feinmaschiges Netz sein.

Durch eine stangenförmige Haltevorrichtung 32 kann die Abdeckung 10 zu einer Rolle 34 aufgewickelt werden. Mittels der Haltevorrichtung 32 kann die Abdeckung 10 auf die Öffnung des Behälters 11 aufgebracht und entfernt werden. Dabei erstreckt sich die Haltevorrichtung 32 quer über die Öffnung 22. Die Haltevorrichtung 32 kann aus Aluminium gefertigt sein.

In Figur 2 ist dargestellt, dass die Abdeckung 10 die Öffnung 22 bedeckt und der Rand 16 der Abdeckung 10 über die Kante der Öffnung 22 gelegt ist. Die Kante der Öffnung 22 kann ein Beckenrand eines Schwimmbeckens sein. Der Rand 16 regt über den Beckenrand. Die Sonnenstrahlung 1 trifft auf den thermochromatischen Abschnitt 12 und erwärmt die darunterliegende Substanz 14, wobei der thermochromatische Abschnitt 12 entsprechend der Temperatur der Substanz 14 seine Farbe ändert. Bei steigender Temperatur nimmt der thermochromatische Abschnitt 12 eine Farbe an, die zu einer geringeren Absorption der Sonnenstrahlung 1 führt. Vorzugsweise wird die Farbe bei insbesondere ca. 30 °C transparent. Bei niedrigen Temperaturen kann sich der thermochromatische Abschnitt 12 dunkelblau verfärben, sodass eine verhältnismäßig hohe Absorption der Sonnenstrahlung 1 möglich ist.

Auf der Unterseite 15 der Abdeckung 10 sind Noppen 17 angeordnet, die durch die Substanz 14 umströmt werden. Die Noppen 17 können Schaumstoff oder luftgefüllte Kammern umfassen. Ferner können die Noppen 17 voneinander beanstandet sein.

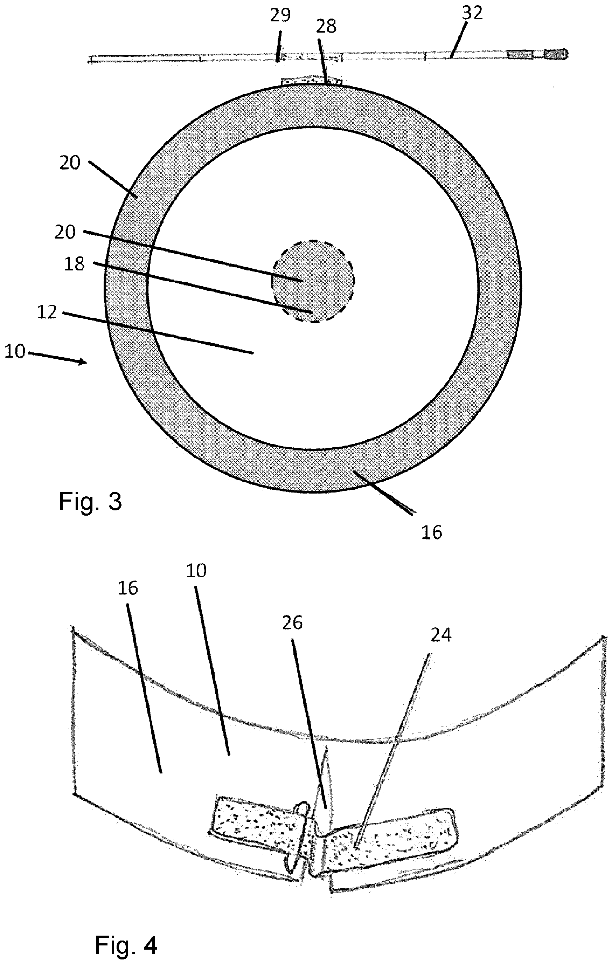

Figur 3 zeigt eine von der Haltevorrichtung 32 abgerollte Abdeckung 10. Ein Haltemittel 28, welches als ein Klettverschluss ausgebildet sein kann, ist auf der Oberseite 30 der Abdeckung 10 angebracht. Insbesondere ist das Haltemittel 28 am Rand 16 angeordnet. Die Haltevorrichtung 32 wird beispielsweise mittels des Klettverschlusses mit der Abdeckung 10 verbunden. Es können auch Haken für die Verbindung verwendet werden. Ist die Verbindung zwischen der Abdeckung 10 und der Haltevorrichtung 32 hergestellt, kann die Abdeckung 10 aufgerollt werden. Der thermochromatische Abschnitt 12 ist ebenfalls ringförmig, kann jedoch auch alternative Ausformungen aufweisen.

Der Filter 20 ist im Bereich des Rands 20 und/oder der Mitte 18 der Abdeckung 10 angeordnet. Es können auch Filter 20 an noch weiteren Orten der Abdeckung 10 angeordnet sein. Der Filter 20 kann kreisförmig, ringförmig und/oder quadratisch sein. Der Filter 20 am Rand 16 der Abdeckung 10 kann als Ring ausgebildet oder aus einzelnen diskreten aneinandergereihten Filtern 20 zusammengesetzt sein. Der Filter 20 in der Mitte 18 der Abdeckung 10 kann als Kreisfläche ausgebildet sein.

Figur 4 offenbart einen Schlitz 26 am Rand 16 der Abdeckung 10, der durch ein Befestigungsmittel 24 überspannt ist. Das Befestigungsmittel 24 kann ein Klettverschluss sein. Durch das Befestigungsmittel 24 kann der Umfang des Randes 16 der Abdeckung 10 verkleinert werden und den Rand 16 einer Öffnung 22 des Behälters 11 umringen und den Behälter 11 verschießen. Der Schlitz 26 ist in dem Abschnitt des Randes 16, der die Kante der Öffnung 22 überlappt, vorganden. Das Befestigungsmittel 24 ist aus einem Band gebildet, das durch eine Öse geführt ist. Das Band kann den Klettverschluss umfassen.

**Bezugszeichen**

| | | | |
|---|---|---|---|
| 1 | Sonnenstrahlung | 22 | Öffnung |
| 10 | Abdeckung | 24 | Befestigungsmittel |
| 11 | Behälter | 26 | Schlitz |
| 12 | Abschnitt | 28 | Haltemittel |
| 14 | Substanz | 29 | Gegenhaltemittel |
| 15 | Unterseite | 30 | Oberseite |
| 16 | Rand | 32 | Haltevorrichtung |
| 17 | Noppen | 34 | Rolle |
| 18 | Mitte | | |
| 20 | Filter | | |

## Patentansprüche

1. Abdeckung (10) für einen Behälter (11), insbesondere einen offenen Flüssigkeits- und/oder Feststoffspeicher, in dem eine Substanz (14) aufgenommen ist, **dadurch gekennzeichnet, dass** die Abdeckung (10) wenigstens einen Abschnitt (12) aufweist, der thermochromatisch ist, so dass der Abschnitt (12) seine Farbe entsprechend der Temperatur der abgedeckten Substanz (14) einstellt.

2. Abdeckung (10) nach Anspruch 1, **dadurch gekennzeichnet, dass** das der thermochromatische Abschnitt (12) eine thermochromatische Beschichtung aufweist und/oder das den Abschnitt (12) bildende Material einen thermochromatischen Stoff umfasst und/oder thermochromatische Fasern in dem Abschnitt (12) enthalten sind, wobei die thermochromatische Beschichtung und/oder der thermochromatische Stoff organisch und/oder anorganisch sind,

3. Abdeckung (10) nach Anspruch 2, **dadurch gekennzeichnet, dass** die thermochromatische Beschichtung und/oder der thermochromatische Stoff als Polymer ausgebildet ist.

4. Abdeckung (10) nach Anspruch 1 oder 2, **dadurch gekennzeichnet, dass** durch Sonnenstrahlung (1) die abgedeckte Substanz (14) durch die Abdeckung (10) erwärmbar ist, wobei der thermochromatische Abschnitt (12) bei steigender Temperatur eine Farbe annimmt, die zu einer geringeren Absorption der Sonnenstrahlung (1) führt.

5. Abdeckung (10) nach Anspruch 4, **dadurch gekennzeichnet, dass** die thermochromatische Beschichtung und/oder der thermochromatische Stoff bei etwa 30 °C transparent ist.

6. Abdeckung (10) nach einem der vorhergehenden Ansprüche, **dadurch gekennzeichnet, dass** die Abdeckung (10) einen Filter (20) aufweist, der für Regenwasser durchlässig ist, jedoch kleine Festkörper herausfiltert.

7. Abdeckung (10) nach Anspruch 6, **dadurch gekennzeichnet, dass** der Filter (20) gefilzte, gewobene, gewirkte oder gestrickte Fasern umfasst.

8. Abdeckung (10) nach Anspruch 6, **dadurch gekennzeichnet, dass** der Filter (20) an einem Rand (16) der Abdeckung (10) und/oder in der Mitte (18) der Abdeckung (10) angeordnet und kreisförmig, ringförmig oder quadratisch ist.

9. Abdeckung (10) nach einem der vorhergehenden Ansprüche, **dadurch gekennzeichnet, dass** die Abdeckung (10) auf einer der Substanz (14) zugewandten Unterseite (15) Noppen aufweist.

10. Abdeckung (10) nach einem der vorhergehenden Ansprüche, **dadurch gekennzeichnet, dass** die Abdeckung (10) als Plane ausgebildet ist.

11. Abdeckung (10) nach einem der vorhergehenden Ansprüche, **dadurch gekennzeichnet, dass** ein Befestigungsmittel (24) an dem Rand (16) und/oder im Bereich eines Schlitzes (26) in der Abdeckung (10) angeordnet ist, so dass der Umfang des Randes (16) der Abdeckung (10) verringerbar ist.

12. Abdeckung (10) nach einem der vorhergehenden Ansprüche, **dadurch gekennzeichnet, dass** ein Haltemittel (28) auf einer Oberseite (30) der Abdeckung (10) angebracht ist, wobei eine Haltevorrichtung (32) an dem Haltemittel (28) anbringbar ist.

13. Abdeckung (10) nach Anspruch 12, **dadurch gekennzeichnet, dass** die Abdeckung (10) durch die Haltevorrichtung (32) auf den Behälter (11) aufgebracht und/oder entfernt wird.
